# EUROPEAN PATENT SPECIFICATION

(11) **EP 0 471 591 B1**
(45) Date of publication and mention of the grant of the patent: **10.05.1995**
(21) Application number: 91307606.3
(22) Date of filing: 16.08.1991
(51) Int. Cl.: B01D 53/14, C01B 17/60

(54) **Process for absorption of sulfur compounds from fluids using heterocyclic compounds having at least one ring nitrogen atom**
Verfahren zur Absorption von Schwefelverbindungen aus Fluiden unter Verwendung von heterozyklischen Verbindungen, die mindestens ein Stickstoffatom im Ringsystem beinhalten
Procédé pour l'absorption des composés de soufre de fluides en utilisant des composés hétérocycliques ayant au moins un atome de nitrogène dans l'anneau

(30) Priority: 16.08.1990 US 569091
(43) Date of publication of application: 19.02.1992
(73) Proprietor: THE DOW CHEMICAL COMPANY, Midland, Michigan 48640 (US)
(72) Inventor: Christiansen, Steven H., Richwood, Texas 77531 (US); Chang, Dane, Houston, Texas 77083 (US); Wilson, David A., Richwood, Texas 77566 (US)
(74) Representative: Burford, Anthony Frederick

(56) References cited:
- US-A- 4 343 716

## Description

This invention relates to a method for removing sulfur compounds from gaseous streams. More particularly, it relates to a method for removing sulfur compounds including sulfur dioxide (SO₂) from fluids.

Removal of such sulfur compounds as sulfur dioxide, for example from fluids such as industrial and utility gas emissions, is increasingly important. Acid rain is believed to occur when sulfur dioxide in such emissions undergoes chemical changes in the atmosphere and returns to earth with precipitation.

There are numerous techniques for removing sulfur compounds from gas streams containing them. One common process employs limestone scrubbing. The disadvantage of this process is the necessity of disposing of the large volume of solid waste produced. The wastes are not generally recycled. Another system, taught in US-A-4,366,134, employs potassium or sodium citrate to selectively remove SO₂ from a gas stream. While the wastes from this process can be recycled, recycle is expensive because thermally stable salts are formed and require higher heat for regeneration.

US-A-3,733,779 discloses the use of N-alkyl lactams, preferably N-alkyl pyrrolidones and N-alkyl piperidones, to absorb sulfur dioxide from gas streams. More recent patents teach the use of certain piperazinone derivatives. For instance, US-A-4,112,049 teaches use of certain piperazinones and N,N'-alkyl piperazinone. In another patent, US-A-4,530,704, the removal of SO₂ from a gas stream is accomplished by contacting a gas stream containing it with an aqueous solution of a piperazinone, morpholinone or N-alkyl substituted derivatives thereof, for example N,N'-dimethyl-2-piperazinone. In US-A-4,783,327 certain hydroxyalkyl substituted piperazinones are taught for use in a similar manner.

SU-A-1,101,280 discloses the use of N,N'-dimethylimidazolidone as an absorbent for the removal of sulfur dioxide from a gas stream. No reference is made to use of said absorbent in aqueous solution.

US-A-4,343,716 discloses aqueous compositions comprising, as an antifoaming agent, a cyclic urea selected from imidazolid-2-one, pyrimidin-2-one and perhydro-1,3-diazepin-2-one derivatives in which one of the ring nitrogen atoms is substituted by a secondary or tertiary alkyl or cycloalkyl or alkyl-substituted cycloalkyl radical having four to twelve carbon atoms and the other ring nitrogen atom is unsubstituted. The compositions also contain an alkali metal salt or an alkali metal hydroxide and an amino compound and are used to remove carbon dioxide and hydrogen sulphide from acid gases.

US-A-4863705 discloses inter alia the use of an aqueous solution of a five - or six - membered heterocyclic hydrocarbon having at least one cyclic nitrogen to reduce the nitrogen oxide content in the effluent from the combustion of a carbonaceous fuel. Exemplification of said heterocyclic hydrocarbons include oxazolidones. There is no reference to the use of oxazolidones or any other heterocyclic hydrocarbon to absorb sulfur dioxide. It teaches that other chemical, catalytic or other procedures would be used to reduce sulfur dioxide concentrations (see column 7, lines 24/27).

It would be advantageous to have a process for removal of sulfur compounds such as sulfur dioxide which employs an aqueous solution and uses an absorbent which has a high capacity for absorbing sulfur dioxide. The absorbent would desirably be regenerable. It is also desirable that this absorbent has adequate water compatibility at ambient or higher temperatures and its salts are water soluble to avoid inducing scaling or plugging of plant equipment.

It has been found that SO₂ can be removed from a fluid by employing, as an absorbent for SO₂, an aqueous solution of at least one compound selected from (i) compounds represented by Formula I: 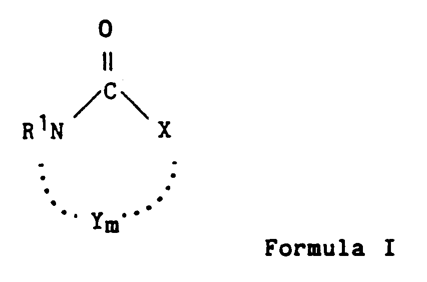
wherein X is -O-, -NR¹-, -N=; each Y is independently -(CR²₂)-, -(C=O)-, -O-, -NR¹-, -N=, or -C(R²)=; each R¹ or R² is independently hydrogen; an optionally inertly substituted alkyl group; an aldehyde group; a carboxylic acid or salt group; and m is an integer from 1 to 4, preferably from 2 to 4, more preferably from 2 to 3, but excluding imidazolidones; (ii) trihydroxy-1,3,5-triazine-2,4,6-trione; and (iii) 4,6-dihydroxy-propyleneurea.

In each of the possible R¹ or R² groups, each alkyl group is of a size or molecular weight suitable for use in absorbing sulfur dioxide, preferably in aqueous solutions. Preferably each alkyl, including the substituted groups such as hydroxyalkyl groups, have from 1 to 12 carbon atoms, more preferably, from 1 to 6 carbon atoms. Each alkyl group is suitably cyclic, branched or unbranched and optionally is at least partially unsaturated (alkylene), for example vinyl or allyl groups or substituents.

In Formula I each alkyl group is unsubstituted or inertly substituted, that is substituted with groups which do not interfere undesirably with use of the compounds to absorb sulfur dioxide, with solubility of the compounds in water or with regeneration of an aqueous solution of the compound after sulfur dioxide is absorbed. The groups preferably also exhibit chemical and thermal stability because the compounds often undergo repeated absorption/regeneration cycles. Exemplary of such inert substituents are hydroxyl groups; carbonyl groups including those in aldehydes, esters, acids, carboxylates and ketones; and sulfoxides.

Preferred substituents, R¹ and R² on compounds of Formula I are those which enhance solubility in water, preferably without decreasing the capacity for absorbing SO₂, the regenerability of the compound after absorption, or the chemical and heat stability under conditions of use. Preferred substituents are generally hydrogen or alkyl (or alkylene) groups and such groups having at least one hydroxyl group, carboxyalkyl groups or salts thereof; more preferably hydrogen, alkyl or hydroxyalkyl groups. When R¹ or R² includes a salt, the salt suitably has any positive counterion which allowed solubility in water, preferably such as metal counterion, more preferably an alkali metal counterion or mixtures thereof.

Preferred compounds among compounds of Formula I include hydantoins (X=-NR¹-, and m=2), triazinones (or N-substituted isocyanuric acids) (X=-NR¹-, m=3, one of Y=-NR¹-), pyrimidinones (X=-NR¹-, m=3), and oxazolidones (X=-O-, m=2), having the indicated structure.

Among compounds represented by Formula I, hydantoins are preferred because of their ready availability, ease of production from basic raw materials (like ammonia, hydrogen cyanide, carbon dioxide and ketones).

Exemplary of the hydantoins are hydantoin, 5,5-dimethylhydantoin; N-methylhydantoin; N-butylhydantoin; N,N′-dimethylhydantoin; N-(2-hydroxyethyl)hydantoin; N,N′-bis(2-hydroxyethyl)hydantoin; N-hydroxymethyl-hydantoin, N,N′-bis(hydroxymethyl)hydantoin, N-(2-hydroxyethyl)-5,5-dimethylhydantoin; N,N′-bis(2-hydroxyethyl)-dimethylhydantoin; N-hydroxymethyl-5,5-dimethylhydantoin; and N,N′-bis(hydroxymethyl)-5,5-dimethylhydantoin. Preferred compounds include hydantoin; 5,5-dialkylhydantoins such as 5,5-dimethylhydantoin; 5-ethyl-5-methylhydantoin; hydroxyalkylated hydantoins and derivatives thereof because such compounds exhibit good solubility, high regenerability, good thermal stability, low vapor pressure (high boiling point), and are readily available in commercial quantities.

Such hydantoins are commercially available and are known in the art. They are prepared by methods within the skill in the art, for instance by processes taught in Kirk-Othmer, Encyclopedia of Chemical Technology, Vol. 12, pp. 692-711 (1978).

Exemplary of the triazinones are 1,3,5-triazine-2,4,6-trione; trihydroxy-1,3,5-triazine-2,4,6-trione; trimethyl-1,3,5-triazine-2,4,6-trione; triallyl-1,3,5-triazine-2,4,6-trione. 1,3,5-triazine-2,4,6-trione. Such compounds as tris(2-hydroxyalkyl)-1,3,5-triazine-2,4,6-triones are also suitably used. Triallyl-1,3,5-triazine-2,4,6-trione is preferred because of relatively high regenerability, good stability, and low vapor pressure (high boiling point).

Triazinones are commercially available and are known in the art. They are prepared by methods within the skill in the art, for instance by procedures such as those taught in Kirk-Othmer, Encyclopedia of Chemical Technology, Vol. 7, pp. 397-405 (1979).

Among compounds of Formula I, pyrimidinones, including propyleneureas and pyrimidindiones, are preferred for their solubility in water. Exemplary of the propyleneureas are N¹,N³-dimethyl-propyleneurea; propyleneurea; N¹-methyl-propyleneurea; N¹,N³-dimethyl-propyleneurea; N¹-(2-hydroxyalkyl)-propyleneurea; N¹,N³-bis(2-hydroxyalkyl)-propylene urea; 4,6-dihydroxy-propyleneurea; 4,5-dimethyl-propyleneurea; and 2,4-pyrimidinedione. N¹,N³-dimethyl-propyleneurea is preferred because of relatively high regenerability, good thermal stability, and low vapor pressure. The structural representation of N¹,N³-dimethylpropyleneurea is: 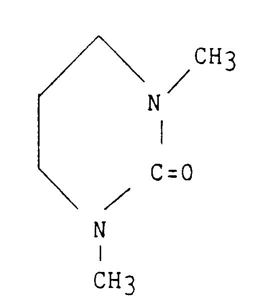
Pyrimidinones are known in the art. They are prepared by methods within the skill in the art, for instance by procedures such as those taught in Synthetic Methods of Organic Chemistry, W. Theilheimer, Vol. 25, pp 215, (1971).

Among compounds of Formula I, oxazolidones including oxazolidinediones are preferred for their relatively high solubility as compared to other compounds having the same degree and type of substitution.

Exemplary of the oxazolidones are 2-oxazolidone; 3-methyl-2-oxazolidone; 5-methyl-2-oxazolidone; 3-(2-hydroxyethyl)-2-oxazolidone; 4,5-dimethyl-2-oxazolidone; 3-(2-hydroxyethyl)-4,5-dimethyl-2-oxazolidone; 2,4-oxazolidinedione; and 5,5-dipropyl-2,4-oxazolidinedione. 2-oxazolidone is preferred because of relatively high regenerability, low vapor pressure (high boiling point) and good thermal stability.

Oxazolidones are commercially available and are known in the art. They are prepared by methods within the skill in the art, for instance by procedures such as those taught in Kirk-Othmer Encyclopedia of Chemical Technology, Vol. 4, p. 762 (1978).

Among compounds of Formula I, preferred compounds are those which have a capacity for absorbing SO₂ which, in combination with the water solubility, is suitable for use in aqueous solutions for absorbing SO₂. The capacity for absorbing SO₂ is determined by saturating a solution of a known concentration of the absorbent in water with SO₂, for example by sparging SO₂ (preferably in a mixture simulating that found in for example smokestacks) into the solution. Sparging is continued until the solution has absorbed a maximum amount of SO₂ (saturation). Then the concentration of bisulfite (including sulfite that may be present) and bisulfate (including sulfate) ions are determined, for example using a standardized commercially available ion chromatograph unit. Such determinations are within the skill in the art and are exemplified in the Examples of this invention. Capacity is calculated as the mole ratio of absorbed SO₂ (as measured by the sum of the moles of bisulfite and bisulfate) to absorbent compound.

The capacity for absorbing SO₂ is considered in combination with the water solubility of the compound because the absorbing capacity of a solution is the capacity of the absorbent multiplied by the amount of absorbent present. An arbitrary parameter CS defined as:

$\text{CS = [Capacity in (moles SO₂/moles absorbent)] × (Solubility in moles absorbent/liter at 23°C)}$

is determined for a potential absorbent. Absorbents used in the practice of the invention preferably have a CS of at least 0.05, more preferably at least 0.5, most preferably at least 0.7 moles SO₂/liter at 23°C.

The compounds used in the present invention are employed in aqueous solution usually at a concentration of from 0.1 weight percent in water up to their saturation concentration in water at the temperature at which the absorber is operated. The absorbent solution, after use, is preferably thermally regenerated, for example by passing steam through the solution, and recycled to the absorption step. The absorber usually is operated at a temperature of from 0° to 120°C, but is preferably operated at a temperature of from 5° to 75°C, most preferably at from 5° to 60°C.

Pressures of from atmospheric to 10 atmospheres (0-900 kPag) usually are employed, but 0 to 10 psig (0 to 70 kPag) is preferably and conveniently employed. Higher temperatures and pressures are not deleterious so long as they are below the decomposition conditions of the absorbent, but equipment design modifications may be required to allow for pressure and temperature resistance. Fluids being treated in the practice of this invention suitably contain any amount of SO₂, for example from one ppm (parts per million) (by volume) up to 100 volume percent, preferably from 100 ppm to 3000 ppm (by volume). The fluids are suitably in any form suitable for sufficient contact, direct or indirect, with the aqueous solution to permit absorption of SO₂. Gas, liquid, suspension and other fluid forms are suitable, but gas form is preferred.

The absorbent compounds are suitably employed using any process within the skill in the art, preferably by contact (direct or indirect) with the fluid containing SO₂. Direct contact particularly contact such as flowing the fluid (preferably gas) through the aqueous solution is preferred. Other means of direct contact include contact of the aqueous solution with SO₂-containing liquid (for example under pressure), optionally with release of pressure after absorption. Indirect contact, such as through a membrane, is also suitable.

Thermal regeneration of the absorbent suitably takes place at any temperature below the thermal decomposition temperature of the absorbent compound, preferably at a temperature of from 75°C to 150°C, most preferably from 90°C to 120°C, at atmospheric pressure. Reduced pressure or pressures above atmospheric are suitable, but 0 to 10 psig (0 to 70 kPag) is convenient. Regeneration at 100°C at atmospheric pressure is particularly convenient because water in the aqueous solution boils and can be refluxed while the SO₂ is released.

Regenerability of an absorbent is a measure of the ability of the absorbent to release SO₂ (so that the absorbent may be reused). Regenerability is determined by measuring the bisulfate and bisulfite concentrations in a solution of known concentration of absorbent which has been saturated with SO₂ as in the determination of SO₂ absorption capacity. This solution is referred to herein as the enriched solution. Then a portion of the enriched solution is heated to strip SO₂ as a gas. For purposes of the measurement, stripping is done at the boiling point of the solution, 100°C with N₂ sparge at 0.5 SCFH (Standard cubic feet per hour) (equivalent to 4 x 10⁻⁶ m³/s at 16°C) for 4 hours. During the stripping, additional water is frequently added to make up the water loss due to evaporation. A sample of this stripped solution is analyzed for bisulfite and bisulfate concentration by the same method used to analyze the concentration of the original enriched solution. The difference in combined bisulfite and bisulfate concentrations between the stripped and enriched SO2 solution is used to calculate the percent regenerability of each solution using the equation: 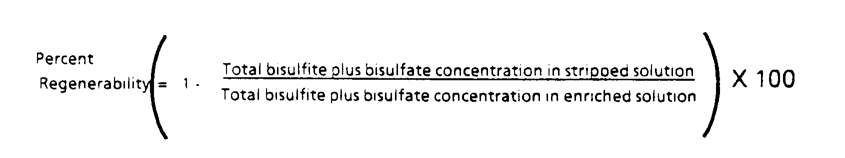
Percent regenerability of absorbents used in the practice of the invention is preferably at least 30, more preferably at least 50, most preferably at least 60 percent.

The following examples illustrate the use of the absorbent compounds in the process of the invention. All parts, ratios and percentages are by weight unless otherwise indicated.

### Examples 1 - 6

For each of the absorbent compounds listed in Table 1, the amount of compound indicated in the Table was placed into a graduate cylinder and deionized water was added to bring the total volume to 70 ml (milliliters) at room temperature (23°C) to form a solution. A 5/95 volume percent mixture of SO₂ and N₂ (respectively) gases was sparged through a coarse (100-150 »m) gas dispersion tube into the solution at 2.0 standard cubic feet per hour, meaning cubic feet at 60°F (16°C) at atmospheric pressure passed per hour (SCFH) (equivalent to 1.6 x 10-5 m³/s at 16°C) for 4 hours to form a SO₂ enriched solution. A small sample of the SO₂ enriched solution was analyzed for bisulfite [HSO₃⁻] and bisulfate [HSO₄⁻] concentration using a standardized ion chromatograph commercially available from Dionex Corporation under the trade designation Dionex™ IC Series 4000, having a column packed with AG4/AS4 resin also commercially available from Dionex Corporation, a conductivity detector commercially available from Wescant, Corp. and a Dionex anion micro membrane suppressor commercially available from Dionex Corp. under the trade designation 8080.

The sum of the bisulfite and bisulfate concentrations was used to calculate the SO₂ capacity (mole ratio of SO₂/absorbent compound) as indicated in the Table. The reported concentrations were corrected for the absorption of water in the absence of absorbent.

Then, the remaining SO₂ enriched solution was transferred into a flask and heated to boil on a hot plate at 100°C with N₂ sparge (0.5 SCFH) (4 x 10-6 m³/s at 16°C) for 4 hours to strip SO₂ as a gas. During the stripping, additional water was frequently added to make up the water loss due to evaporation. A sample of this stripped solution was analyzed for bisulfite and bisulfate concentration by the same method used to analyze the concentration of the original enriched solution. The difference in combined bisulfite and bisulfate concentration between the stripped and original (enriched) SO₂ solution was used to calculate the SO₂ percent regenerability of each solution using the equation: 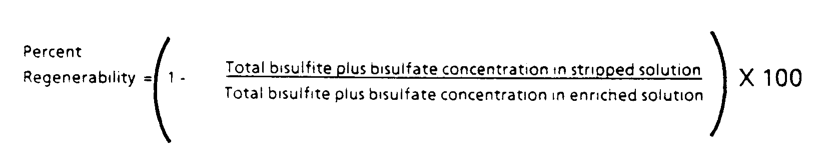
The CS, calculated by multiplying the capacity times the solubility in moles/l, is included in Table 1. The compounds used in Examples 3-5 were used in concentrations less that saturation; therefore the CS reported in the table was based on concentration in place of solubility.

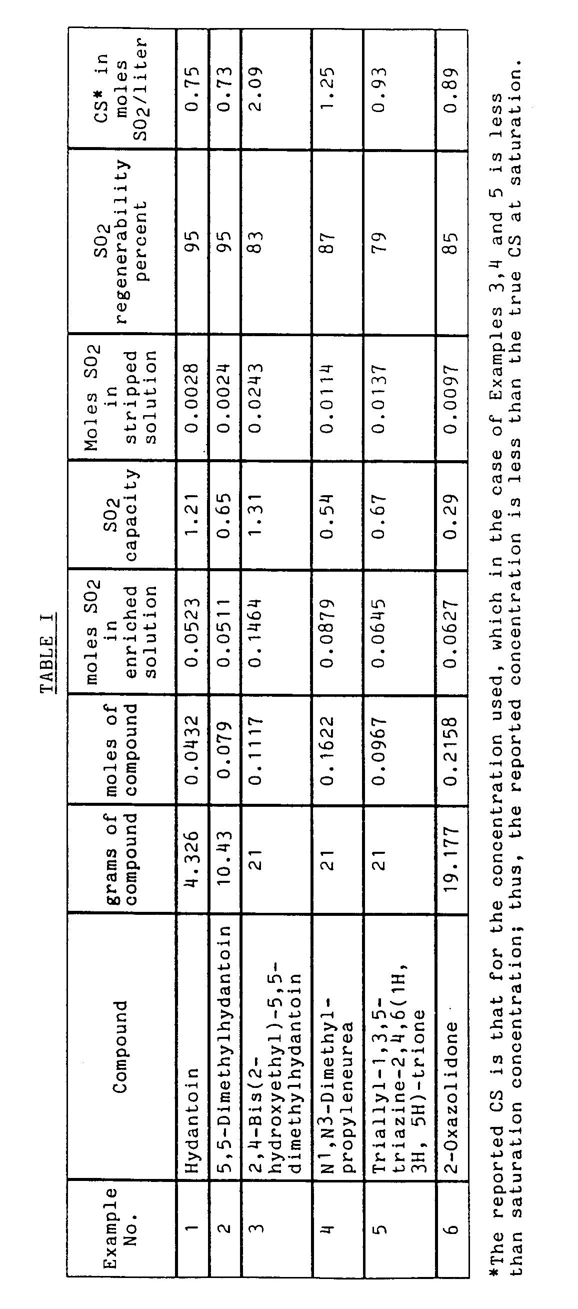

The data in Table I show that compounds of Formula I, particularly hydantoins, pyrimidinones, triazinones, and oxazolidones have sufficient capacity and regenerability to be very useful in removing SO₂ from fluids.

## Claims

1. The use in aqueous solution, for absorbing SO₂ from a fluid, of at least one compound selected from (i) compounds represented by Formula I: 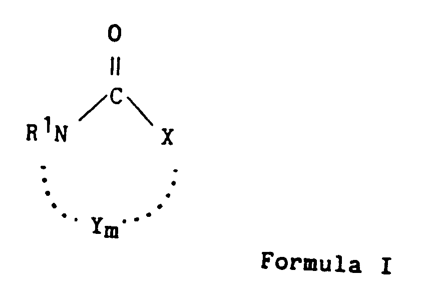 wherein X is -O-, -NR¹-, or -N=; each Y is independently -(CR²₂)-, -(C=O)-, -O-, -NR¹-, -N=, or -C(R²)=; each R¹ or R² is independently hydrogen; an optionally inertly substituted alkyl group; an aldehyde group; or a carboxylic acid or salt group; and m is an integer of from 1 to 4, but excluding imidazolidones; (ii) trihydroxy-1,3,5-triazine-2,4,6-trione; and (iii) 4,6-dihydroxy-propyleneurea.

2. A use as claimed in Claim 1, wherein when at least one R¹ is an optionally inertly substituted alkyl group it is an alkyl group containing a hydroxy group, an aldehyde group, a carboxylic acid or salt group, ketone, carboxylic ester, ether, or sulfoxide group.

3. A use as claimed in Claim 1 or Claim 2, wherein at least one of R¹ or R² is selected from hydrogen and C₁-C₆ alkyl groups optionally having at least one hydroxy group, or carboxyalkyl group or salt thereof.

4. A use as claimed in claim 3, wherein at least one of R¹ or R² is selected from hydrogen, C₁-C₆ alkyl and C₁-C₆ hydroxyalkyl.

5. A use as claimed in any one of the preceding claims, wherein said compound is a hydantoin.

6. A use as claimed in Claim 5, wherein said compound is selected from hydantoin, 5,5-dimethylhydantoin; N-methylhydantoin; N-butylhydantoin; N,N'-dimethylhydantoin; N-hydroxymethylhydantoin, N,N'-bis(hydroxymethyl)hydantoin, N-(2-hydroxyethyl)hydantoin; N,N'-bis(2-hydroxyethyl)-hydantoin; N-(2-hydroxyethyl)-5,5-dimethylhydantoin; N,N'-bis(2-hydroxyethyl)dimethylhydantoin; N-hydroxymethyl-5,5-dimethylhydantoin; N,N'-bis(hydroxymethyl)-5,5-dimethylhydantoin; and 5-ethyl-5-methylhydantoin.

7. A use as claimed in any one of Claims 1 to 4, wherein said compound is a triazinone.

8. A use as claimed in Claim 7, wherein said compound is selected from 1,3,5-triazine-2,4,6-trione; trihydroxy-1,3,5-triazine-2,4,6-trione; trimethyl-1,3,5-triazine-2,4,6-trione; triallyl-1,3,5-triazine-2,4,6-trione; and tris(2-hydroxyalkyl)-1,3,5-triazine-2,4,6-triones.

9. A use as claimed in Claim 8, wherein said compound is triallyl-1,3,5-triazine-2,4,6-trione.

10. A use as claimed in any one of Claims 1 to 4, wherein said compound is a pyrimidinone.

11. A use as claimed in Claim 10, wherein said compound is selected from N¹,N³-dimethyl-propyleneurea; propyleneurea; N¹-methyl-propyleneurea; N¹,N³-dimethyl-propyleneurea; N¹-(2-hydroxyalkyl)-propyleneureas; N¹,N³-bis(2-hydroxyalkyl)-propyleneureas; 4,6-dihydroxy-propyleneurea; and 4,5-dimethyl-propyleneurea; and 2,4-pyrimidinedione.

12. A use as claimed in Claim 11, wherein said compound is N¹,N³-dimethylpropyleneurea.

13. A use as claimed in any one of Claims 1 to 4, wherein said compound is an oxazolidone.

14. A use as claimed in Claim 13, wherein said compound is selected from 2-oxazolidone; 3-methyl-2-oxazolidone; 5-methyl-2-oxazolidone; 3-(2-hydroxyethyl)2-oxazolidone; 4,5-dimethyl-2-oxazolidone; 3-(2-hydroxyethyl)-4,5-dimethyl-2-oxazolidone; 2,4-oxazolidinedione; and 5,5-dipropyl-2,4-oxazolidinedione.

15. A use as claimed in Claim 14, wherein said compound is 2-oxazolidone.

16. A use as claimed in any one of the preceding claims, wherein the aqueous solution contains a concentration of said compound of at least 0.1 weight percent and wherein absorption of the SO₂ from the fluid is conducted at a temperature of from 0°C to 120°C.

17. A use as claimed in any one of the preceding claims, wherein after absorption of SO₂ by the aqueous solution, SO₂ is removed from the aqueous solution by heating the solution.

18. A process for removing SO₂ from a fluid, comprising contacting said fluid with an absorbent for SO₂, characterized in that said absorbent is an aqueous solution of a compound selected from (i) compounds represented by Formula I: 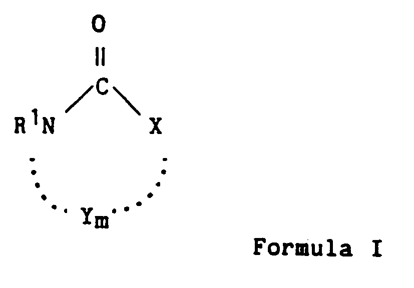 wherein X is -O-, -NR¹-, or -N=; each Y is independently -(CR²₂)-, -(C=O)-, -O-, -NR¹-, -N=, or -C(R²)=; each R¹ or R² is independently hydrogen; an optionally inertly substituted alkyl group; an aldehyde group; or a carboxylic acid or salt group; and m is 2 or 3, said compound being a hydantoin, hydroxyalkylpropyleneurea, hydroxypropyleneurea, oxazolidone, 2,4-pyrimidinedione or triazinone; (ii) trihydroxy-1,3,5-triazine-2,4,6-trione; and (iii) 4,6-dihydroxy-propyleneurea.

19. A process as claimed in Claim 18, wherein said compound is a hydantoin.

20. A process as claimed in Claim 19, wherein said compound is selected from hydantoin, 5,5-dimethylhydantoin; N-methylhydantoin; N-butylhydantoin; N,N'-dimethylhydantoin; N-hydroxymethylhydantoin, N,N'-bis(hydroxymethyl)hydantoin, N-(2-hydroxyethyl)hydantoin; N,N'-bis(2-hydroxyethyl)-hydantoin; N-(2-hydroxyethyl)-5,5-dimethyl-hydantoin; N,N'-bis(2-hydroxyethyl)dimethylhydantoin; N-hydroxymethyl-5,5-dimethylhydantoin; N,N'-bis(hydroxymethyl)-5,5-dimethylhydantoin; and 5-ethyl-5-methylhydantoin.

21. A process as claimed in Claim 18, wherein said compound is a triazinone.

22. A process as claimed in Claim 21, wherein said compound is selected from 1,3,5-triazine-2,4,6-trione; trihydroxy-1,3,5-triazine-2,4,6-trione; trimethyl-1,3,5-triazine-2,4,6-trione; triallyl-1,3,5-triazine-2,4,6-trione; and tris(2-hydroxyalkyl)-1,3,5-triazine-2,4,6-triones.

23. A process as claimed in Claim 18, wherein said compound is an oxazolidone.

24. A process as claimed in Claim 23, wherein said compound is selected from 2-oxazolidone; 3-methyl-2-oxazolidone; 5-methyl-2-oxazolidone; 3-(2-hydroxyethyl)-2-oxazolidone; 4,5-dimethyl-2-oxazolidone; 3-(2-hydroxyethyl)-4,5-dimethyl-2-oxazolidone; 2,4-oxazolidinedione; and 5,5-dipropyl-2,4-oxazolidinedione.

25. A process as claimed in any one of Claims 18 to 24, wherein the aqueous solution contains a concentration of said compound of at least 0.1 weight percent and wherein absorption of the SO₂ from the fluid is conducted at a temperature of from 0°C to 120°C.

26. A process as claimed in any one of Claims 18 to 25, wherein after absorption of SO₂ by the aqueous solution, SO₂ is removed from the aqueous solution by heating the solution.

## Patentansprüche

1. Verwendung mindestens einer Verbindung, welche ausgewählt ist unter
(i) Verbindungen der Formel (I): 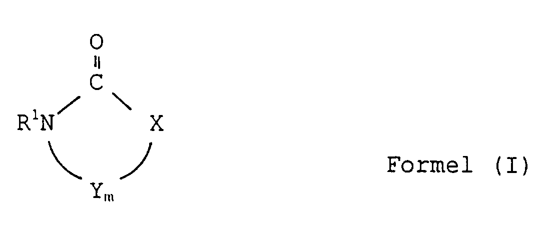 worin X -O-, -NR¹ oder -N= ist, jedes Y unabhängig -(CR²₂)-, -(C=O)-, -O-, NR¹, -N= oder -C(R²)= ist, jedes R¹ oder R² unabhängig Wasserstoff, eine wahlweise inert substituierte Alkylgruppe, eine Aldehydgruppe, eine Carbonsäure- oder Salzgruppe ist und m eine ganze Zahl von 1 bis 4 ist, wobei jedoch Imidazolidone ausgeschlossen sind;
(ii) Trihydroxy-1,3,5-triazin-2,4,6-trion, und
(iii) 4,6-Dihydroxypropylenharnstoff,
in einer wäßrigen Lösung zur Absorption von SO₂ aus einem Fluid.

2. Verwendung nach Anspruch 1, wobei wenn mindestens ein R¹ eine wahlweise inert substituierte Alkylgruppe ist, diese eine Alkylgruppe mit einer Hydroxygruppe, Aldehydgruppe, Carbonsäure- oder Salzgruppe, einer Keto-, Carbonsäureester-, Ether- oder eine Sulfoxidgruppe ist.

3. Verwendung nach Anspruch 1 oder Anspruch 2, wobei mindestens einer von R¹ und R² ausgewählt ist unter Wasserstoff und C₁₋₆-Alkylgruppen, die wahlweise mindestens eine Hydroxygruppe oder Carboxyalkylgruppe oder ein Salz davon aufweisen.

4. Verwendung nach Anspruch 3, wobei mindestens einer von R¹ oder R² ausgewählt ist unter Wasserstoff, C₁₋₆-Alkyl und C₁₋₆-Hydroxyalkyl.

5. Verwendung nach einem der vorhergehenden Ansprüche, wobei die Verbindung ein Hydantoin ist.

6. Verwendung nach Anspruch 5, wobei die Verbindung ausgewählt ist unter Hydantoin, 5,5-Dimethylhydantoin, N-Methylhydantoin, N-Butylhydantoin, N,N'-Dimethylhydantoin, N-Hydroxymethyl)hydantoin, N,N'-Bis(2-hydroxymethyl)-hydantoin, N-(2-Hydroxyethyl)hydantoin, N,N'-Bis(2-hydroxyethyl)-hydantoin, N-(2-Hydroxyethyl)-5,5-dimethylhydantoin, N,N'-Bis(2-hydroxyethyl)dimethylhydantoin, N-Hydroxymethyl-5,5-dimethylhydantoin, N,N'-Bis(hydroxymethyl)-5,5-dimethylhydantoin und 5-Ethyl-5-methylhydantoin.

7. Verwendung nach einem der Ansprüche 1 bis 4, wobei die Verbindung ein Triazinon ist.

8. Verwendung nach Anspruch 7, wobei die Verbindung ausgewählt ist unter 1,3,5-Triazin-2,4,6-trion, Trihydroxy-1,3,5-triazin-2,4,6-trion, Trimethyl-1,3,5-triazin-2,4,6-trion, Triallyl-1,3,5-triazin-2,4,6-trion und Tris(2-hydroxyalkyl)-1,3,5-triazin-2,4,6-trionen.

9. Verwendung nach Anspruch 8, wobei die Verbindung Triallyl-1,3,5-triazin-2,4,6-trion ist.

10. Verwendung nach einem der Ansprüche 1 bis 4, wobei die Verbindung ein Pyrimidinon ist.

11. Verwendung nach Anspruch 10, wobei die Verbindung ausgewählt ist unter N¹,N³-Dimethyl-propylenharnstoff, Propylenharnstoff, N¹-Methyl-propylenharnstoff, N¹,N³-Dimethyl-propylenharnstoff, N¹-(2-Hydroxyalkyl)-propylenharnstoffen, N¹,N³-Bis(2-hydroxyalkyl)-propylenharnstoffen, 4,6-Dihydroxy-propylenharnstoff und 4,5-Dimethyl-propylenharnstoff und 2,4-Pyrimidindion.

12. Verwendung nach Anspruch 11, wobei die Verbindung N¹,N³-Dimethylpropylenharnstoff ist.

13. Verwendung nach einem der Ansprüche 1 bis 4, wobei die Verbindung ein Oxazolidon ist.

14. Verwendung nach Anspruch 13, wobei die Verbindung ausgewählt ist unter 2-Oxazolidon, 3-Methyl-2-oxazolidon, 5-Methyl-2-oxazolidon, 3-(2-hydroxyethyl)-2-oxazolidon, 4,5-Dimethyl-2-oxazolidon, 3-(2-Hydroxyethyl)-4,5-dimethyl-2-oxazolidon, 2,4-Oxazolidindion und 5,5-Dipropyl-2,4-oxazolidindion.

15. Verwendung nach Anspruch 14, wobei die Verbindung 2-Oxazolin ist.

16. Verwendung nach einem der vorhergehenden Ansprüche, wobei die wäßrige Lösung die Verbindung in einer Konzentration von mindestens 0,1 Gew.-% enthält und wobei die Absorption des SO₂ aus dem Fluid bei einer Temperatur von 0°C bis 120°C durchgeführt wird.

17. Verwendung nach einem der vorhergehenden Ansprüche, wobei nach Absorption von SO₂ durch die wäßrige Lösung das SO₂ aus der wäßrigen Lösung durch Erhitzen der Lösung entfernt wird.

18. Verfahren zur Entfernung von SO₂ aus einem Fluid, welches Inkontaktbringen des Fluids mit einem Absorptionsmittel für SO₂ umfaßt, dadurch gekennzeichnet, daß das Absorptionsmittel eine wäßrige Lösung einer Verbindung ist, die ausgewählt ist unter
(i) Verbindungen der Formel (I): 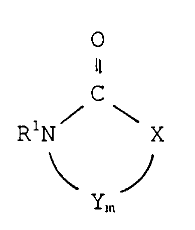 worin X -O-, -NR¹ oder -N= ist, jedes Y unabhängig -(CR²₂)-, -(C=O)-, -O-, NR¹, -N= oder -C(R²)= ist, jedes R¹ oder R² unabhängig Wasserstoff, eine wahlweise inert substituierte Alkylgruppe, eine Aldehydgruppe oder eine Carbonsäure oder Salzgruppe ist und m 2 oder 3 ist, wobei die Verbindung ein Hydantoin, Hydroxyalkylpropylenharnstoff, Hydroxypropylenharnstoff, Oxazolidon, 2,4-Pyrimidindion oder Triazon ist,
(ii) Trihydroxy-1,3,5-triazin-2,4,6-trion, und
(iii) 4,6-Dihydroxypropylenharnstoff.

19. Verfahren nach Anspruch 18, wobei die Verbindung ein Hydantoin ist.

20. Verfahren nach Anspruch 19, wobei die Verbindung ausgewählt ist unter Hydantoin, 5,5-Dimethylhydantoin, N-Methylhydantoin, N-Butylhydantoin, N,N'-Dimethylhydantoin, N-Hydroxymethylhydantoin, N,N'-Bis(hydroxymethyl)hydantoin, N-(2-Hydroxyethyl)hydantoin, N,N'-Bis(2-hydroxyethyl)hydantoin, N-(2-Hydroxyethyl)-5,5-dimethylhydantoin, N,N'-Bis(2-hydroxyethyl)dimethylhydantoin, N-Hydroxymethyl-5,5-dimethylhydantoin, N,N'-Bis(hydroxymethyl)-5,5-dimethylhydantoin und 5-Ethyl-5-methylhydantoin.

21. Verfahren nach Anspruch 18, wobei die Verbindung ein Triazinon ist.

22. Verfahren nach Anspruch 21, wobei die Verbindung ausgewählt ist unter 1,3,5-Triazin-2,4,6-trion, Trihydroxy-1,3,5-triazin-2,4,6-trion, Trimethyl-1,3,5-triazin-2,4,6-trion, Triallyl-1,3,5-triazin-2,4,6-trion und Tris(2-hydroxyalkyl)-1,3,5-triazin-2,4,6-trionen.

23. Verfahren nach Anspruch 18, wobei die Verbindung ein Oxazolidon ist.

24. Verfahren nach Anspruch 23, wobei die Verbindung ausgewählt ist unter 2-Oxazolidon, 3-Methyl-2-oxazolidon, 5-Methyl-2-oxazolidon, 3-(2-Hydroxyethyl)-2-oxazolidon, 4,5-Dimethyl-2-oxazolidon, 3-(2-Hydroxyethyl)-4,5-dimethyl-2-oxazolidon, 2,4-Oxazolidindion und 5,5-Dipropyl-2,4-oxazolidindion.

25. Verfahren nach einem der Ansprüche 18 bis 24, wobei die wäßrige Lösung die Verbindung in einer Konzentration von mindestens 0,1 Gew.-% enthält und wobei die Absorption des SO₂ aus dem Fluid bei einer Temperatur von 0°C bis 120°C durchgeführt wird.

26. Verfahren nach einem der Ansprüche 18 bis 25, wobei nach Absorption von SO₂ durch die wäßrige Lösung das SO₂ aus der wäßrigen Lösung durch Erhitzen der Lösung entfernt wird.

## Revendications

1. Utilisation en solution aqueuse, pour l'absorption de SO₂ à partir d'un fluide, d'au moins un composé choisi parmi (i) les composés représentés par la Formule I: 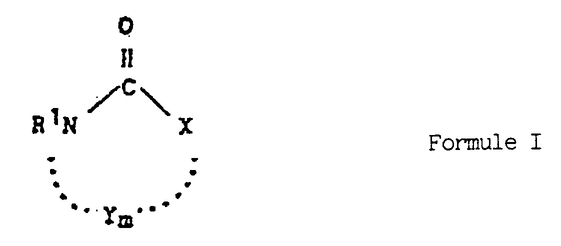 où X est -O-, -NR¹- ou -N=; chaque Y est indépendamment -(CR²₂)-, -(C=O)-, -O-, -NR¹-, -N= ou -C(R²)=; chaque R¹ ou R² est indépendamment hydrogène; un groupe alcoyle éventuellement substitué de manière inerte; un groupe aldéhyde; ou un groupe acide carboxylique ou un sel de celui-ci; et m est un nombre entier de 1 à 4, mais à l'exclusion des imidazolidones; (ii) trihydroxy-1,3,5-trizine-2,4,6-trione; et (iii) 4,6-dihydroxy-propylène-urée.

2. Utilisation selon Ia revendication 1, dans laquelle, lorsqu'au moins un R¹ est un groupe alcoyle éventuellement substitué de manière inerte, celui-ci est un groupe alcoyle contenant un groupe hydroxy, un groupe aldéhyde, un groupe acide carboxylique ou un sel de celui-ci cétone, ester carboxylique, éther ou un groupe sulfoxyde.

3. Utilisation selon la revendication 1 ou la revendication 2, dans laquelle au moins l'un de R¹ ou R² est choisi parmi hydrogène et les groupes alcoyle en C₁-C₆ ayant éventuellement au moins un groupe hydroxy ou un groupe carboxyalcoyle ou un sel de celui-ci.

4. Utilisation selon la revendication 3, dans laquelle au moins l'un parmi R¹ ou R³ est choisi parmi hydrogène, alcoyle en C₁-C₆ et hydroxyalcoyle en C₁-C₆.

5. Utilisation selon l'une quelconque des revendications précédentes, dans laquelle ledit composeé est une hydantoïne.

6. Utilisation selon la revendication 5, dans laquelle ledit composé est choisi parmi les hydantoïne; 5,5-diméthylhydantoïne; N-méthylhydantoïne; N-butylhydantoïne; N,N'-diméthylhydantoïne;N-hydroxyméthylhydantoïne; N,N'-bis(hydroxyméthyl)hydantoïne; N-(2-hydroxyéthyl)hydantoïne; N,N'-bis(2-hydroxyéthyl)hydantoïne; N-(2-hydroxyéthyl)-5,5-diméthylhydantoïne; N,N'-bis(2-hydroxyéthyl)diméthylhydantoïne; N-hydroxyméthyl-5,5-diméthylhydantoïne; N,N'-bis(hydroxyméthyl)-5,5-diméthylhydantoïne, et 5-éthyl-5-méthylhydantoïne.

7. Utilisation selon l'une quelconque des revendications 1 à 4, dans laquelle ledit composé est un triazinone.

8. Utilisation selon la revendication 7, dans laquelle ledit composé est choisi parmi les 1,3,5-triazine-2,4,6-trione; trihydroxy-1,3,5-triazine-2,4,6-trione; triméthyl-1,3,5-triazine-2,4,6-trione; triallyl-1,3,5-trazine-2,4,6-trione, et tris(2-hydroxyalkyl)-1,3,5-triazine-2,4,6-triones.

9. Utilisation selon la revendication 7, dans laquelle ledit composé est la triallyl-1,3,5-trazine-2,4,6-trione.

10. Utilisation selon l'une quelconque des revendications 1 à 4, dans laquelle ledit composé est une pyrimidinone.

11. Utilisation selon la revendication 10, dans laquelle ledit composé est choisi parmi les N¹,N³-diméthylpropylène-urée; propylène-urée; N¹-méthylpropylène-urée; N¹,N³-diméthylpropylène-urée; N¹-(2-hydroxyalkyl)propylène-urée, N¹,N³-bis(2-hydroxyalkyl)propylène-urée; 4,6-dihydroxypropylène-urée, et 4,5-diméthylpropylène-urée, et 2,4-pyrimidinedione.

12. Utilisation selon la revendication 11, dans laquelle ledit composé est la N¹,N³-diméthylpropylène-urée.

13. Utilisation selon l'une quelconque des revendications 1 à 4, dans laquelle ledit composé est une oxazolidone.

14. Utilisation selon la revendication 13, dans laquelle ledit composé est choisi parmi les 2-oxazolidone; 3-méthyl-2-oxazolidone; 5-méthyl-2-oxazolidone; 3-(2-hydroxyéthyl)-2-oxazolidone; 4,5-dimthyl-2-oxazolidone; 3-(2-hydroxyéthyl)-4,5-diméthyl-2-oxazolidone; 2,4-oxazolidinedione, et 5,5-dipropyl-2,4-oxazolidinedione.

15. Utilisation selon la revendication 13, dans laquelle ledit composé est la 2-oxazolidone.

16. Utilisation selon l'une quelconque des revendications précédentes, dans laquelle la solution aqueuse contient une concentration dudit composé d'au moins 0,1 pour cent en poids et dans laquelle l'absorption du SO₂ du fluide est réalisée à une température de 0°C à 120°C.

17. Utilisation selon l'une quelconque des revendications précédentes, dans laquelle, après adsorption du SO₂ par la solution aqueuse, le SO₂ est éliminé de la solution aqueuse par chauffage de la solution.

18. Procédé d'élimination de SO₂ d'un fluide, comprenant la mise en contact dudit fluide avec un agent absorbant de SO₂, caractérisé par le fait que ledit agent absorbant est une solution aqueuse d'un composé choisi parmi (i) les composés représentés par la Formule I: 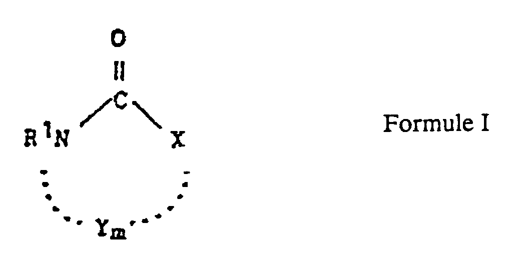 où X est -O-, -NR¹- ou -N=; chaque Y est indépendamment -(CR²)-, -(C=O)-, -O-, -NR¹-, -N= ou -C(R²)=; chaque R¹ ou R² est indépendamment hydrogène; un groupe alcoyle éventuellement substitué de manière inerte; un groupe aldéhyde; ou un groupe acide carboxylique ou un sel de celui-ci; et m est 2 ou 3, ledit composé étant une hydantoïne, une hydroxyalkylpropylène-urée, une oxazolidone, 2,4-pyrimidinedione ou une triazinone; (ii) une trihydroxy-1,3,5-triazine-2,4,6-trione; et (iii) une 4,6-dihydroxy-propylène-urée.

19. Procédé selon la revendication 18, dans lequel ledit composé est une hydantoïne.

20. Procédé selon la revendication 19, dans lequel ledit composé est choisi parmi les hydantoïne; 5,5,-diméthylhydantoïne; N-méthylhydantoïne; N-butylhydantoïne; N,N'-diméthylhydantoïne;N-hydroxyméthylhydantoïne; N,N'-bis(hydroxyméthyl)hydantoïne; N-(2-hydroxyéthyl)hydantoïne; N,N'-bis(2-hydroxyéthyl)hydantoïne; N-(2-hydroxyéthyl)-5,5-diméthylhydantoïne; N,N'-bis(2-hydroxyéthyl)diméthylhydantoïne; N-hydroxyméthyl-5,5-diméthylhydantoïne; N,N'-bis(hydroxyméthyl)-5,5-diméthylhydantoïne, et 5-éthyl-5-méthylhydantoïne.

21. Procédé selon la revendication 18, dans lequel ledit composé est une triazinone.

22. Procédé selon la revendication 21, dans lequel ledit composé est choisi parmi les 1,3,5-thazine-2,4,6-trione; trihydroxy-1,3,5-triazine-2,4,6-trione; triméthyl-1,3,5-triazine-2,4,6-trione; triallyl-1,3,5-trazine-2,4,6-trione, et tris(2-hydroxyalkyl)-1,3,5-triazine-2,4,6-trione.

23. Procédé selon la revendication 18, dans lequel ledit composé est une oxazolidone.

24. Procédé selon la revendication 23, dans lequel ledit composé est choisi parmi les 2-oxazolidone; 3-méthyl-2-oxazolidone; 5-méthyl-2-oxazolidone; 3-(2-hydroxyéthyl)-2-oxazolidone; 4,5-diméthyl-2-oxazolidone; 3-(2-hydroxyéthyl)-4,5-diméthyl-2-oxazolidone; 2,4-oxazolidinedione, et 5,5-dipropyl-2,4-oxazolidinedione.

25. Procédé selon l'une quelconque des revendications 18 à 24, dans lequel la solution aqueuse contient une concentration dudit composé d'au moins 0,1 pour cent en poids et dans laquelle l'absorption du SO₂ du fluide est réalisée à une température de 0°C à 120°C.

26. Procédé selon l'une quelconque des revendications 18 à 25, dans lequel, après absorption du SO₂ par la solution aqueuse, le SO₂ est éliminé de la solution aqueuse par chauffage de la solution.
